(19) Europäisches Patentamt
European Patent Office
Office européen des brevets

(11) **EP 3 792 935 B1**

(12) **EUROPÄISCHE PATENTSCHRIFT**

(45) Veröffentlichungstag und Bekanntmachung des Hinweises auf die Patenterteilung:
**01.12.2021   Patentblatt 2021/48**

(51) Int Cl.:
***G21F 5/10*** *(2006.01)*

(21) Anmeldenummer: **19197547.3**

(22) Anmeldetag: **16.09.2019**

(54) **VERFAHREN ZUR TROCKNUNG VON TRANSPORT- UND/ODER LAGERBEHÄLTERN**

METHOD FOR DRYING TRANSPORT AND / OR STORAGE CONTAINERS

PROCÉDÉ DE SÉCHAGE DES RÉCIPIENTS DE TRANSPORT ET / OU DE STOCKAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.03.2021   Patentblatt 2021/11**

(73) Patentinhaber: **GNS Gesellschaft für Nuklear-Service mbH**
**45127 Essen (DE)**

(72) Erfinder:
• **Rirschl, Christoph**
  **44653 Herne (DE)**
• **Dreesen, Konrad**
  **52445 Titz (DE)**

(74) Vertreter: **Andrejewski - Honke**
**Patent- und Rechtsanwälte Partnerschaft mbB**
**An der Reichsbank 8**
**45127 Essen (DE)**

(56) Entgegenhaltungen:
**US-A1- 2017 154 690     US-B1- 9 117 558**

• **IRWIN J J ET AL: "SPENT NUCLEAR FUEL PROJECT COLD VACUUM DRYING FACILITY OPERATIONS MANUAL", INTERNET CITATION, 18. November 1998 (1998-11-18), Seiten 1-1, XP008137638, Gefunden im Internet: URL:http://www.osti.gov/bridge/servlets/pu rl/782339-1wvfsn/webviewable/782339.pdf [gefunden am 2011-06-07]**

**Beschreibung**

Die Erfindung betrifft ein Verfahren zur Trocknung von Transport- und/oder Lagerbehältern für radioaktive Abfälle, insbesondere für abgebrannte Brennelemente, wobei der Behälter zunächst entwässert bzw. mechanisch entwässert wird und wobei der Behälterinnenraum des Behälters anschließend kontinuierlich evakuiert wird bzw. auf Unterdruck gehalten wird. - Anstelle des Begriffes Transport- und/oder Lagerbehälter wird nachfolgend auch kurz der Begriff Behälter verwendet.

Verfahren der vorstehend genannten Art zur Trocknung von Transport- und/oder Lagerbehältern sind aus der Praxis grundsätzlich in unterschiedlichen Ausführungsvarianten bekannt. Behälter für abgebrannte Brennelemente werden in der Regel unter Wasser mit den abgebrannten Brennelementen beladen, weil Wasser ein effektives Abschirmungsmedium für entstehende Neutronen darstellt. Bei der weiteren Handhabung wird der Behälter üblicherweise zunächst entwässert bzw. mechanisch entwässert. Anschließend wird das in dem Behälter noch verbliebene Wasser durch Trocknung, insbesondere durch Vakuumtrocknung aus dem Behälter entfernt.

Es ist auch bereits bekannt, das in dem Behälter noch verbliebene Wasser mit Hilfe eines durch den Behälterinnenraum geleiteten Gases, insbesondere eines Inertgases wie Stickstoff oder Helium zu entfernen. Dazu kann beispielsweise auf US 10229764 B2 verwiesen werden. Bei den hier bekannten Maßnahmen wird zunächst das Gas zur Trocknung durch den Behälterinnenraum geleitet und nach Abschluss dieser Maßnahme wird der Behälter unter Vakuum gesetzt.

Die insoweit bekannten Trocknungsverfahren sind teilweise relativ aufwendig und insoweit auch kostspielig. Außerdem zeichnen sich viele bekannte Trocknungsverfahren durch eine unzureichende Trocknungseffizienz aus. Das gilt vor allem auch für Transport- und/oder Lagerbehälter mit einer hohen Wärmeleistung.

Aus dem Dokument XP008137638 (Irwin JJ et al: "Spent Nuclear Fuel Project Cold Vacuum Drying Facility Operations Manual", Internet Citation, 18. November 1998 (1998-11-18), Seiten 1-1) ist ein Verfahren zur Trocknung von Kanistern für radioaktive Abfälle bekannt. Dabei wird ein Behälter zunächst entwässert und anschließend wird der Behälterinnenraum kontinuierlich evakuiert bzw. auf Unterdruck gehalten. Dabei wird gleichzeitig kontinuierlich Edelgas, vorzugsweise Heliumgas in den Behälterinnenraum eingespeist. Diese bekannten Maßnahmen lassen im Hinblick auf die Effektivität der Trocknung zu wünschen übrig.

Weiterhin ist aus US 9117558 B1 ein Verfahren zur Trocknung von Behältern für radioaktive Abfälle bekannt, wobei der Behälter ebenfalls zunächst entwässert wird und anschließend evakuiert wird. Auch dabei wird gleichzeitig kontinuierlich Edelgas in den Behälterinnenraum eingespeist. Die Trocknungseffizienz lässt auch hier zu wünschen übrig. - Schließlich ist aus US 2017/154690 A1 ebenfalls ein Verfahren zur Trocknung von Behältern für radioaktive Abfälle bekannt, bei dem der Behälter zunächst entwässert und anschließend der Behälterinnenraum kontinuierlich auf Unterdruck gehalten wird. Gleichzeitig wird kontinuierlich Edelgas eingespeist. Die hier offenbarten Maßnahmen stehen in Bezug auf den erforderlichen Aufwand und den erzielten Wirkungsgrad der Trocknung in keinem vernünftigen Verhältnis.

Demgegenüber liegt der Erfindung das technische Problem zugrunde, ein Verfahren der eingangs genannten Art anzugeben, das auf einfache und wenig aufwendige Weise durchführbar ist, das sich durch eine hohe Trocknungseffizienz auszeichnet und vor allem auch für Behälter mit hoher Wärmeleistung geeignet ist.

Zur Lösung dieses technischen Problems lehrt die Erfindung ein Verfahren zur Trocknung von Transport- und/oder Lagerbehältern für radioaktive Abfälle, insbesondere für abgebrannte Brennelemente, wobei der Behälter zunächst entwässert bzw. mechanisch entwässert wird,

wobei anschließend der Behälterinnenraum kontinuierlich evakuiert wird bzw. auf Unterdruck gehalten wird und besonders bevorzugt auf einem konstanten bzw. im Wesentlichen konstanten Unterdruck gehalten wird, wobei gleichzeitig kontinuierlich Edelgas, insbesondere Heliumgas in den Behälterinnenraum eingespeist wird

und wobei die Evakuierung und/oder die Edelgaseinspeisung bzw. Heliumgaseinspeisung mit der Maßgabe durchgeführt wird, dass der Edelgasgehalt bzw. der Heliumgehalt im Behälterinnenraum 50 bis 95 Vol.-%, insbesondere 55 bis 90 Vol.-%, vorzugsweise 60 bis 85 Vol.-% und bevorzugt 65 bis 85 Vol.-% beträgt,

wobei nach der Entwässerung des Behälters zunächst ohne Edelgaseinspeisung bzw. ohne Heliumgaseinspeisung eine erste Evakuierung des Behälterinnenraumes durchgeführt wird,

wobei nach der ersten Evakuierung des Behälterinnenraumes und vor der Edelgaseinspeisung bzw. Heliumgaseinspeisung die Evakuierung für einen Zeitraum t unterbrochen wird und während dieses Zeitraumes t der Druckanstieg $\Delta p$ im Behälterinnenraum für die Ermittlung des einzustellenden Befülldruckes ptot der Edelgaseinspeisung bzw. der Heliumgaseinspeisung gemessen wird

und wobei der Wasserdampfpartialdruck $p_{H2O}$ im Behälterinnenraum nach der ersten Evakuierung mittels des gemessenen Druckanstieges $\Delta p$ berechnet wird und aus dem Wasserdampfpartialdruck $p_{H2O}$ der erforderliche Befülldruck ptot für die Edelgaseinspeisung bzw. Heliumgaseinspeisung zur Erzielung des gewünschten Vol.-%-Gehaltes des Edelgases bzw. Heliums (50-95 Vol.-%) im Behälter berechnet wird.

Nach einer empfohlenen Ausführungsvariante beträgt der Edelgasgehalt bzw. der Heliumgehalt im Behälterinnenraum 70 bis 80 Vol.-%. Wenn nachfolgend von Helium bzw. Heliumgas die Rede ist, meint dies im Rahmen der Erfindung ganz allgemein Edelgas und bevorzugt Helium bzw. Heliumgas.

Das erfindungsgemäße Verfahren betrifft insbesondere die Trocknung von Transport- und/oder Lagerbehältern für abgebrannte Brennelemente. Empfohlenermaßen wird das erfindungsgemäße Verfahren für Behälter mit höheren bzw. hohen Wärmeleistungen eingesetzt und zwar für Wärmeleistungen zwischen 12,5 kW bis 42 kW, insbesondere für Wärmeleistungen zwischen 15 kW und 40 kW und vor allem für Wärmeleistungen zwischen 20 kW und 40 kW, beispielsweise zwischen 25 kW und 40 kW. Das Verfahren kann so durchgeführt werden bzw. wird vorzugsweise mit der Maßgabe durchgeführt, dass Brennstabhüllrohrtemperaturen von 320 bis 400 °C und insbesondere von 350 bis 400 °C eingehalten werden bzw. eingehalten werden können.

Im Rahmen des erfindungsgemäßen Verfahrens wird der Behälter zunächst entwässert bzw. mechanisch entwässert. Nach dieser Entwässerung des Behälters wird zunächst ohne Heliumgaseinspeisung eine erste Evakuierung des Behälterinnenraumes und somit eine erste Unterdruckerzeugung bzw. Vakuumerzeugung im Behälterinnenraum durchgeführt. Diese erste Evakuierung wird zweckmäßigerweise bis zu einem Druck im Behälterinnenraum von 8 bis 30 mbar, insbesondere von 8 bis 25 mbar, bevorzugt von 8 bis 20 mbar und besonders bevorzugt von 10 bis 20 mbar durchgeführt. Nach einer sehr empfohlenen Ausführungsform der Erfindung beträgt der hierbei erzeugte Druck bzw. Unterdruck 8 bis 12 mbar, beispielsweise 10 mbar. Bewährtermaßen wird die erste Evakuierung über einen Zeitraum von 4 bis 12 Stunden, insbesondere von 5 bis 10 Stunden durchgeführt.

Erfindungsgemäß wird nach der ersten Evakuierung des Behälterinnenraumes und vor der Heliumgaseinspeisung die Evakuierung des Behälterinnenraumes für einen Zeitraum t unterbrochen wird. Während dieses Zeitraumes t wird der Druckanstieg $\Delta p$ im Behälterinnenraum gemessen und zwar für die Ermittlung des einzustellenden Befülldruckes ptot der nachfolgenden Heliumgaseinspeisung.

Nach der ersten Evakuierung bzw. Unterdruckerzeugung wird der Wasserdampfpartialdruck $p_{H2O}$ im Behälterinnenraum mittels des gemessenen Druckanstieges $\Delta p$ berechnet. Aus diesem berechneten Wasserdampfpartialdruck $p_{H2O}$ wird der erforderliche Befülldruck ptot für die Heliumgaseinspeisung zur Erzielung des gewünschten Vol.-%-Gehaltes des Heliums (50 bis 95 Vol.-%) im Behälter berechnet. Weiter unten wird für diese Berechnung ein Ausführungsbeispiel offenbart.

Der gewünschte Vol.-%-Gehalt des Heliums liegt in den in Patentanspruch 1 beanspruchten Vol.-%-Bereichen.

Es liegt weiterhin im Rahmen der Erfindung, dass nach der ersten Evakuierung bzw. Unterdruckerzeugung und vorzugsweise nach der Druckanstiegsmessung die erfindungsgemäße kontinuierliche Evakuierung des Behälterinnenraumes und die gleichzeitige kontinuierliche Heliumgaszuführung durchgeführt wird. Die Evakuierung und die Heliumgaszuführung wird vorzugsweise mit der Maßgabe durchgeführt, dass der Druck im Behälterinnenraum zwischen 8 und 30 mbar, insbesondere zwischen 8 und 25 mbar, vorzugsweise zwischen 8 und 20 mbar und bevorzugt zwischen 10 und 20 mbar liegt. Nach einer empfohlenen Ausführungsform liegt der Druck im Behälterraum zwischen 8 und 12 mbar, beispielsweise bei 10 mbar. Es liegt fernerhin im Rahmen der Erfindung, dass dieser Druck während der kontinuierlichen Evakuierung und der gleichzeitigen kontinuierlichen Heliumgaszuführung konstant gehalten wird bzw. im Wesentlichen konstant gehalten wird. - Nach besonders empfohlener Ausführungsform der Erfindung wird die kontinuierliche Evakuierung und die kontinuierliche Heliumgaseinspeisung über eine Zeitspanne von mindestens drei Stunden, vorzugsweise von mindestens vier Stunden, bevorzugt von mindestens 4,5 Stunden und sehr bevorzugt von mindestens 5 Stunden durchgeführt. Gemäß einer bewährten Ausführungsvariante der Erfindung erfolgt die kontinuierliche Evakuierung und die gleichzeitige kontinuierliche Heliumgaseinspeisung über einen Zeitraum von 3 bis 35 Stunden, insbesondere über einen Zeitraum von 3,5 bis 32 Stunden und vorzugsweise über einen Zeitraum von 4 bis 31 Stunden, sehr bevorzugt über einen Zeitraum zwischen 5 und 30 Stunden. Zweckmäßigerweise wird dabei über diesen Zeitraum der oben spezifizierte Druck im Behälterinnenraum eingehalten und vorzugsweise konstant gehalten bzw. im Wesentlichen konstant gehalten. Empfohlenermaßen wird der Druck im Behälterinnenraum über zumindest 95 % dieses Zeitraumes eingehalten und vorzugsweise konstant gehalten bzw. im Wesentlichen konstant gehalten.

Es liegt im Rahmen der Erfindung, dass nach Erreichen des gewünschten Trocknungsgrades im Behälterinnenraum die kontinuierliche Evakuierung beendet wird und zunächst weiter Heliumgas in den Behälterinnenraum bis zur Erzielung eines vorgegebenen Druckes in den Behälterinnenraum eingespeist wird. - Zweckmäßigerweise wird der Trocknungsgrad mit Hilfe einer Druckanstiegsmessung bezüglich des Druckes im Behälterinnenraum gemessen. Dazu wird vorzugsweise sowohl die kontinuierliche Evakuierung als auch die Heliumgaseinspeisung unterbrochen und der Druckanstieg im Behälter wird bevorzugt mittels zumindest eines Drucksensors gemessen. Nach Erreichen des gewünschten Trocknungsgrades im Behälterinnenraum wird also zweckmäßigerweise die kontinuierliche Evakuierung beendet und zunächst weiter Heliumgas in den Behälterinnenraum eingespeist. Dabei wird empfohlenermaßen der Behälterinnenraum bis zu einem Innenraumdruck von 850 bis 1.100 mbar, insbesondere bis zu einem Innenraumdruck von 900 bis 1.050 mbar und bevorzugt bis zu einem Innenraumdruck von 900 bis 1.000 mbar mit Heliumgas befüllt. Dann ist vorzugsweise der Trocknungsvorgang beendet.

Es liegt im Rahmen des erfindungsgemäßen Verfahrens, dass der Behälter während der kontinuierlichen Evakuierung des Behälterinnenraumes und der gleichzeitigen kontinuierlichen Heliumgaszuführung verschlossen ist und insbesondere mit zumindest einem bzw. mit einem Primärdeckel verschlossen ist. Außerdem liegt es im Rahmen der Erfindung, dass der Behälter bei der ersten Evakuierung des Behälterinnenraumes und/oder bei der Druckanstiegsmessung nach der ersten Evakuierung und/oder bei der Druckanstiegsmessung zur Ermittlung des Trocknungsgrades und/oder bei der abschließenden Befüllung des Behälterinnenraumes mit Heliumgas verschlossen ist bzw. mit zumindest einem Primärdeckel, insbesondere mit einem Primärdeckel verschlossen ist. Vorzugsweise erfolgt die Evakuierung des Behälters und die Heliumgaseinspeisung in den Behälter durch den Primärdeckel des Behälters. Nach empfohlener Ausführungsform der Erfindung wird die Absaugung bzw. Evakuierung des Behälterinnenraumes mit zumindest einer Evakuierungslanze durchgeführt, wobei die Evakuierungslanze zweckmäßigerweise den Primärdeckel des Behälters durchgreift.

Es hat sich bewährt, dass das Heliumgas im oberen Bereich des Behälters eingespeist wird. Empfohlenermaßen erfolgt die Absaugung bzw. die Evakuierung des Behälterinnenraumes im unteren Bereich des Behälters bzw. des Behälterinnenraumes. Nach einer besonders empfohlenen Ausführungsform der Erfindung wird die Evakuierung bzw. werden die Evakuierungen und die Heliumgaseinspeisung mit zumindest einem Doppelrohr aus einem Außenrohr und einem von dem Außenrohr umgebenen Innenrohr durchgeführt. Zweckmäßigerweise durchgreift dieses Doppelrohr den Primärdeckel des Behälters. Es empfiehlt sich, dass das Innenrohr sich bis zu einem unteren Bereich des Behälters erstreckt und dass das Außenrohr im oberen Bereich des Behälters endet. Über das Innenrohr erfolgt zweckmäßigerweise die Evakuierung des Behälterinnenraumes und über das Außenrohr erfolgt vorzugsweise die Heliumgaseinspeisung in den Behälterinnenraum. - Es liegt im Rahmen der Erfindung, dass das freie Volumen des Behälterinnenraumes 2 bis 8 m$^3$, vorzugsweise 3 bis 6 m$^3$ beträgt. Freies Volumen meint dabei das Innenraumvolumen des Behälters ohne Tragkorb und Brennelemente.

Es wurde weiter oben dargelegt, dass nach bevorzugter Ausführungsform der Erfindung nach der ersten Evakuierung des Behälterinnenraumes und vor der Heliumgaseinspeisung die Evakuierung für einen Zeitraum t unterbrochen wird und dass während dieses Zeitraumes t der Druckanstieg $\Delta p$ im Behälterinnenraum für die Ermittlung des einzustellenden Befülldruckes ptot der Heliumgaseinspeisung gemessen wird. Diese Ermittlung wird anhand des nachfolgenden Ausführungsbeispiels bzw. Berechnungsbeispiels näher erläutert.

Im Rahmen des Ausführungsbeispiels soll der Befülldruck ptot für die Heliumgaseinspeisung zur Erzielung eines Heliumanteils von 75 Vol.-% an der Behälteratmosphäre ermittelt werden. Für das erforderliche Partialdruckverhältnis des Heliumpartialdruckes $p_{He}$ zum Wasserdampfpartialdruck $p_{H2O}$ gilt:

$$p_{He}/p_{H2O} = 75/25 = 3$$

Daraus folgt für den Heliumpartialdruck:

$$p_{He} = 3 \times p_{H2O}$$

und für den erforderlichen Befülldruck $p_{tot}$ für die Heliumgaseinspeisung:

$$p_{tot} = p_{He} + p_{H2O} = 4 \times p_{H2O}.$$

Der bei laufender Vakuumtrocknung mit einem Saugvermögen von > 200 m$^3$/h (effektives Saugvermögen $S_{eff} \geq 200 \times 0,573 \geq 114,6$ m$^3$/h) sich maximal einstellende Wasserdampfpartialdruck $p_{H2O}$ wird mit Hilfe einer vorausgegangenen Druckanstiegsmessung bestimmt, die im vorliegenden Fall über einen Zeitraum t von 15 Minuten durchgeführt wird. Für die Verdampfungsrate $q_{PV}$ in hPa x l/s gilt:

$$q_{PV} = p \times V$$

$$q_{PV} = \Delta p \times V/t$$

Dabei steht $\Delta p$ für den Druckanstieg in hPa, V für das freie Behälterinnenraumvolumen in l und t für die Messzeit in Sekunden. Für den Wasserdampfpartialdruck $p_{H2O}$ gilt dann:

$$p_{H2O} = q_{PV}/S_{eff} = \Delta p \times V/(t \times S_{eff})$$

$$p_{H2O} = \Delta p * 5.220/(900 \times 31,8).$$

Der zur Sicherstellung eines Heliumanteils von 75 Vol.-% durch Heliumgaseinspeisung einzustellende Befülldruck ptot = 4 x $p_{H2O}$ errechnet sich aus dem Druckanstieg über 15 Minuten somit zu:

$$p_{tot} = 0,73 \times \Delta p.$$

Der Erfindung liegt die Erkenntnis zugrunde, dass mit dem erfindungsgemäßen Trocknungsverfahren eine sehr einfache und wenig aufwendige und zugleich sehr präzise und funktionssichere Trocknung des Behälterinnenraumes eines Transport- und/oder Lagerbehälters möglich ist. Dabei zeichnet sich das Verfahren durch eine überraschend hohe Trocknungseffizienz aus. Insoweit weist das erfindungsgemäße Verfahren beachtliche Vorteile gegenüber bislang aus der Praxis bzw. aus dem Stand der Technik bekannten Trocknungsverfahren auf. Der apparative Aufwand zur Durchführung des Trocknungsverfahrens ist im Hinblick auf den erzielten Erfolg relativ gering. Das erfindungsgemäße Verfahren zeichnet sich durch hohe Funktionssicherheit und geringe Störanfälligkeit aus. Das Trocknungsverfahren eignet sich vor allem - allerdings nicht ausschließlich - für Behälter mit höherer bzw. hoher Wärmeleistung. Die erfindungsgemäßen Parameter lassen sich bei der Verfahrensdurchführung einfach und reproduzierbar einhalten. Der Kostenaufwand zur Durchführung des erfindungsgemäßen Verfahrens ist verhältnismäßig gering.

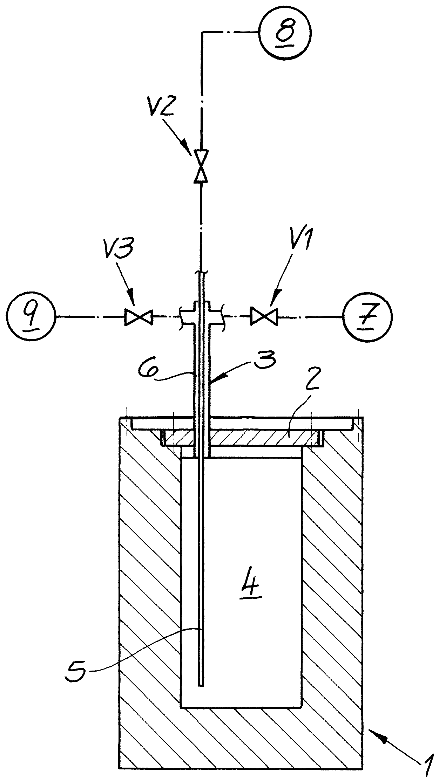

Nachfolgend wird die Erfindung anhand einer lediglich ein Ausführungsbeispiel darstellenden Zeichnung näher erläutert. Die einzige Figur zeigt ein Schema zur Durchführung des erfindungsgemäßen Trocknungsverfahrens.

Die Figur verdeutlicht vereinfacht ein erfindungsgemäßes Trocknungsverfahren. Dargestellt ist ein Transport- und/oder Lagerbehälter 1, der mit einem nicht dargestellten Tragkorb mit abgebrannten Brennelementen beladen wurde. Die Beladung erfolgte unter Wasser und der Behälter 1 wurde zunächst entwässert bzw. mechanisch entwässert. Vorzugsweise und im Ausführungsbeispiel ist auf den Behälter 1 ein Primärdeckel 2 zum Verschluss des Behälters 1 aufgebracht. Zweckmäßigerweise und im Ausführungsbeispiel durchgreift ein Doppelrohr 3 den Primärdeckel 2 des Behälters 1 und führt in den Behälterinnenraum 4. Empfohlenermaßen und im Ausführungsbeispiel weist das Doppelrohr 3 ein als Evakuierungslanze ausgebildetes Innenrohr 5 auf, das sich bis in den unteren Bereich des Behälterinnenraumes 4 erstreckt. Bewährtermaßen und im Ausführungsbeispiel wird das Innenrohr 5 von einem Außenrohr 6 umgeben, wobei dieses Außenrohr 6 im oberen Bereich des Behälters 1 bzw. bevorzugt und im Ausführungsbeispiel an der Unterseite des Primärdeckels 2 endet.

Nach bevorzugter Ausführungsform und im Ausführungsbeispiel ist an das Außenrohr 6 eine Heliumgasquelle 7 über ein Ventil V1 angeschlossen. Über das Ventil V2 ist bevorzugt und im Ausführungsbeispiel eine Vakuumpumpe 8 angeschlossen. Fernerhin ist vorzugsweise und im Ausführungsbeispiel ein Drucksensor 9 vorgesehen, der über das Ventil V3 mit dem Außenrohr 6 und somit mit dem Behälterinnenraum 4 verbunden ist. Der Drucksensor 9 dient insbesondere zur Messung des Druckanstieges $\Delta p$.

Empfohlenermaßen wird zunächst eine erste Evakuierung des Behälterinnenraumes 4 mit Hilfe der Vakuumpumpe 8 bei geöffnetem Ventil V2 und bei geschlossenen Ventilen V1 sowie V3 durchgeführt. Zweckmäßigerweise wird diese erste Evakuierung bis zu einem Druck im Behälterinnenraum 4 von 10 mbar durchgeführt. Bewährtermaßen und im Ausführungsbeispiel erfolgt diese Evakuierung über einen Zeitraum von 3 bis 12 Stunden, insbesondere von 4 bis 11 Stunden und vorzugsweise von 5 bis 10 Stunden. Zweckmäßigerweise wird nach der ersten Evakuierung des Behälterinnenraumes 4 und vor der Heliumgaseinspeisung die Evakuierung für einen Zeitraum t unterbrochen. Der Zeitraum t mag beispielsweise 15 Minuten betragen. Während dieses Zeitraumes t wird empfohlenermaßen der Druckanstieg $\Delta p$ im Behälterinnenraum 4 für die Ermittlung des einzustellenden Befülldruckes ptot der Heliumgaseinspeisung gemessen. Die Messung des Druckanstieges $\Delta p$ erfolgt mit dem Drucksensor 9. Dazu wird das Ventil V2 zur Vakuumpumpe 8 geschlossen und das Ventil V3 zum Drucksensor 9 bei weiterhin geschlossenem Ventil V1 geöffnet. Aus dem gemessenen Druckanstieg $\Delta p$ wird bevorzugt der Wasserdampfpartialdruck $p_{H2O}$ im Behälterinnenraum 4 berechnet und aus diesem Wasserdampfpartialdruck $p_{H2O}$ wird der erforderliche Befülldruck ptot für die Heliumgaseinspeisung zur Erzielung des gewünschten Vol.-%-Gehaltes des Heliums im Behälter 1 berechnet. Das wurde weiter oben bereits ausführlicher erläutert.

Es liegt im Rahmen der Erfindung, dass nach der ersten Evakuierung und nach der Druckanstiegsmessung die erfindungsgemäße kontinuierliche Evakuierung des Behälterinnenraumes 4 und die gleichzeitige kontinuierliche Heliumgaszuführung in den Behälterinnenraum 4 durchgeführt wird. Dazu sind die Ventile V1 und V2 geöffnet. Diese kontinuierliche Evakuierung und die gleichzeitige kontinuierliche Heliumgaszuführung wird vorzugsweise mit der Maßgabe durchgeführt, dass der Druck im Behälterinnenrum 4 zwischen 8 und 30 mbar beträgt, insbesondere zwischen 10 und 20 mbar beträgt und besonders bevorzugt nicht kleiner als 10 mbar ist. Zweckmäßigerweise wird die kontinuierliche Evakuierung und die gleichzeitige kontinuierliche Heliumgaseinspeisung über eine Zeitspanne von mindestens 4 Stunden und beispielsweise über eine Zeitspanne von 5 bis 30 Stunden durchgeführt.

Gemäß empfohlener Ausführungsform der Erfindung wird nach Erreichung des gewünschten Trocknungsgrades im Behälterinnenraum 4 die kontinuierliche Evakuierung durch Schließen des Ventils V2 beendet und zunächst wird weiter Heliumgas bei geöffnetem Ventil V1 in den Behälterinnenraum 4 bis zur Erzielung eines vorgegebenen Druckes eingespeist. Der gewünschte Trocknungsgrad kann vorzugsweise erneut über eine Druckanstiegsmessung mittels des Drucksensors 9 bestimmt werden. Zweckmäßigerweise wird der Behälterinnenraum 4 dann bis zu einem Innenraumdruck von 850 bis 1.100 mbar, bevorzugt bis zu einem Innenraumdruck von 900 bis 1.000 mbar mit Heliumgas befüllt. Damit ist das Trocknungsverfahren abgeschlossen.

Aus der Figur ergibt sich, dass die Heliumgaseinspeisung über das Außenrohr 6 des Doppelrohres 3 am oberen Ende des Behälterinnenraumes 4 erfolgt, wohingegen die Absaugung bzw. Evakuierung über das als Evakuierungslanze ausgebildete Innenrohr 5 im unteren Bereich des Behälterinnenraumes 4 erfolgt. Diese bevorzugte Ausgestaltung hat sich im Rahmen der Erfindung besonders bewährt.

**Patentansprüche**

1. Verfahren zur Trocknung von Transport- und/oder Lagerbehältern (1) für radioaktive Abfälle, insbesondere für abgebrannte Brennelemente, wobei der Behälter (1) zunächst entwässert bzw. mechanisch entwässert wird,

   wobei nach der Entwässerung des Behälters (1) zunächst ohne Edelgaseinspeisung bzw. ohne Heliumgaseinspeisung eine erste Evakuierung des Behälterinnenraumes (4) durchgeführt wird, wobei anschließend der Behälterinnenraum (4) kontinuierlich evakuiert wird bzw. auf Unterdruck gehalten wird, wobei gleichzeitig kontinuierlich Edelgas, vorzugsweise Heliumgas in den Behälterinnenraum (4) eingespeist wird,
   wobei nach der ersten Evakuierung des Behälterinnenraumes (4) und vor der Edelgaseinspeisung bzw. Heliumgaseinspeisung die Evakuierung für einen Zeitraum t unterbrochen wird und während dieses Zeitraumes t der Druckanstieg $\Delta p$ im Behälterinnenraum (4) für die Ermittlung des einzustellenden Befülldruckes ptot der Edelgaseinspeisung bzw. der Heliumgaseinspeisung gemessen wird
   und wobei der Wasserdampfpartialdruck $p_{H2O}$ im Behälterinnenraum (4) nach der ersten Evakuierung mittels des gemessenen Druckanstieges $\Delta p$ berechnet wird und aus dem Wasserdampfpartialdruck $p_{H2O}$ der erforderliche Befülldruck ptot für die Edelgaseinspeisung bzw. Heliumgaseinspeisung zur Erzielung des gewünschten Vol.-%-Gehaltes des Edelgases bzw. Heliums von 50 bis 95 Vol.-% im Behälter (1) berechnet wird,
   wobei die Evakuierung und/oder die Edelgaseinspeisung bzw. Heliumgaseinspeisung mit der Maßgabe durchgeführt wird, dass der Edelgasgehalt bzw. der Heliumgehalt im Behälterinnenraum 50 bis 95 Vol.-%, insbesondere 55 bis 90 Vol.-%, vorzugsweise 60 bis 85 Vol.-% und bevorzugt 65 bis 85 Vol.-% beträgt.

2. Verfahren nach Anspruch 1, wobei die erste Evakuierung des Behälterinnenraumes bis zu einem Druck im Behälterinnenraum (4) von 8 bis 30 mbar, insbesondere von 10 bis 30 mbar und bevorzugt von 10 bis 20 mbar durchgeführt wird.

3. Verfahren nach einem der Ansprüche 1 oder 2, wobei nach der ersten Evakuierung bzw. nach der Druckanstiegsmessung die kontinuierliche Evakuierung des Behälterinnenraumes (4) und die gleichzeitige kontinuierliche Edelgaszuführung bzw. Heliumgaszuführung durchgeführt wird und zwar vorzugsweise mit der Maßgabe durchgeführt wird, dass der Druck im Behälterinnenraum (4) zwischen 8 und 30 mbar, insbesondere zwischen 10 und 30 mbar, bevorzugt zwischen 10 und 20 mbar liegt.

4. Verfahren nach einem der Ansprüche 1 bis 3, wobei die kontinuierliche Evakuierung und die kontinuierliche Edelgaseinspeisung bzw. Heliumgaseinspeisung über eine Zeitspanne von mindestens 3 Stunden, vorzugsweise von mindestens 4 Stunden und bevorzugt von mindestens 4,5 Stunden durchgeführt wird.

5. Verfahren nach einem der Ansprüche 1 bis 4, wobei nach Erreichung des gewünschten Trocknungsgrades im Behälterinnenraum (4) die kontinuierliche Evakuierung beendet wird und zunächst weiter Edelgas bzw. Heliumgas in den Behälterinnenraum (4) bis zur Erzielung eines vorgegebenen Druckes in den Behälterinnenraum (4) eingespeist wird.

6. Verfahren nach Anspruch 5, wobei der Behälterinnenraum (4) bis zu einem Innenraumdruck von 850 bis 1.100 mbar, insbesondere bis zu einem Innenraumdruck von 900 bis 1.050 mbar und bevorzugt bis zu einem Innenraumdruck von 900 bis 1.000 mbar mit Edelgas bzw. Heliumgas befüllt wird.

7. Verfahren nach einem der Ansprüche 1 bis 6, wobei Edelgas bzw. Heliumgas im oberen Bereich des Behälters (1) eingespeist wird.

8. Verfahren nach einem der Ansprüche 1 bis 7, wobei mittels zumindest einer Evakuierungslanze die Absaugung bzw. Evakuierung des Behälterinnenraumes (4) im unteren Bereich des Behälters (1) durchgeführt wird.

9. Verfahren nach einem der Ansprüche 1 bis 8, wobei die Evakuierung und die Edelgaseinspeisung bzw. Heliumgaseinspeisung mit zumindest einem Doppelrohr (3) aus einem Außenrohr (6) und einem von dem Außenrohr (6) umgebenen Innenrohr (5) durchgeführt wird, wobei sich vorzugsweise das Innenrohr (5) bis zu einem unteren Bereich des Behälters (1) erstreckt und wobei das Außenrohr (6) im oberen Bereich des Behälters (1) endet.

## Claims

1. A method for drying transport and/or storage tanks (1) for radioactive waste, in particular, for spent fuel elements, wherein the tank (1) is first dewatered or mechanically dewatered,

   wherein, after the dewatering of the tank (1), initially without inert gas injection or without a helium gas injection, a first evacuation of the tank interior (4) is carried out,
   wherein the tank interior (4) is then continuously evacuated or kept at negative pressure, wherein, simultaneously, inert gas, preferably helium gas is continuously injected into the tank interior (4),
   wherein, after the first evacuation of the tank interior (4) and before the inert gas injection or helium gas injection, the evacuation is interrupted for a period t and during this period t, the pressure increase $\Delta p$ in the tank interior (4) is measured to determine the filling pressure $P_{tot}$ of the inert gas injection or the helium gas injection
   and wherein the water-vapour partial pressure $P_{H2O}$ in the tank interior (4) is calculated after the first evacuation by means of the measured pressure increase $\Delta p$ and from the water-vapour partial pressure $P_{H2O}$ the required filling pressure $P_{tot}$ for the inert gas injection or helium gas injection to achieve the desired vol.-% content of the inert gas or helium of 50 to 95 vol.-% in the tank (1) is calculated,
   wherein the evacuation and/or the inert gas injection or helium gas injection is carried out with the proviso that the inert gas content or the helium content in the tank interior is 50 to 95 vol.-%, in particular, 55 to 90 vol.-%, preferably 60 to 85 vol.-% and more preferably, 65 to 85 vol.-%.

2. The method according to Claim 1, wherein the first evacuation of the tank interior is carried out up to a pressure in the tank interior (4) of 8 to 30 mbar, in particular, from 10 to 30 mbar and preferably from 10 to 20 mbar.

3. The method according to any one of the Claims 1 or 2, wherein, after the first evacuation or after the pressure rise measurement, the continuous evacuation of the tank interior (4) and the simultaneous continuous inert gas supply or helium gas supply are carried out, preferably with the proviso that the pressure in the tank interior (4) is between 8 and 30 mbar, in particular, between 10 and 30 mbar, preferably between 10 and 20 mbar.

4. The method according to any one of the Claims 1 to 3, wherein the continuous evacuation and the continuous inert gas injection or helium gas injection is carried out over a period of at least 3 hours, preferably over a period of at least 4 hours and preferably over a period of at least 4.5 hours.

5. The method according to any one of the Claims 1 to 4, wherein, after achieving the desired degree of drying in the tank interior (4), the continuous evacuation is terminated and, initially, further inert gas or helium gas is injected into the tank interior (4) until a specified pressure is achieved in the tank interior (4).

6. The method according to Claim 5, wherein the tank interior (4) is filled with inert gas or helium up to an interior pressure of 850 to 1,100 mbar, in particular, up to an interior pressure of 900 to 1,050 mbar and preferably up to an interior pressure of 900 to 1,000 mbar.

7. The method according to any one of the Claims 1 to 6, wherein inert gas or helium gas 5 is injected within the upper region of the tank (1).

8. The method according to any one of the Claims 1 to 7, wherein, by means of at least one evacuation lance, the suction or evacuation of the tank interior (4) is carried out within the lower region of the tank (1).

9. The method according to any one of Claims 1 to 8, wherein the evacuation and the inert gas injection or helium gas injection is carried out using at least one double pipe (3) consisting of an outer pipe (6) and an inner pipe (5) surrounded by the outer pipe (6), wherein, preferably, the inner pipe (5) extends to a lower region of the tank (1) and wherein the outer pipe (6) ends in the upper part of the tank (1).

## Revendications

1. Procédé pour le séchage de récipients de transport et/ou de stockage (1) pour des déchets radioactifs, en particulier pour des éléments combustibles brûlés, dans lequel le récipient (1) est tout d'abord asséché ou asséché mécaniquement,

   dans lequel, après l'assèchement du récipient (1), une première évacuation de l'espace intérieur du récipient (4) est effectuée tout d'abord sans injection de gaz noble ou sans injection d'hélium gazeux,
   dans lequel l'espace intérieur du récipient (4) est ensuite évacué en continu ou maintenu en dépression, dans lequel du gaz noble, de préférence de l'hélium gazeux, est injecté simultanément en continu dans l'espace intérieur du récipient (4),

dans lequel, après la première évacuation de l'espace intérieur du récipient (4) et avant l'injection de gaz noble ou l'injection d'hélium gazeux, l'évacuation est interrompue pour un laps de temps t et l'augmentation de pression $\Delta p$ dans l'espace intérieur du récipient (4) est mesurée pendant ce laps de temps t pour déterminer la pression de remplissage $p_{tot}$ à régler pour l'injection de gaz noble ou l'injection d'hélium gazeux,

et dans lequel le pression partielle de la vapeur d'eau $p_{H2O}$ dans l'espace intérieur du récipient (4) après la première évacuation est calculée au moyen de l'augmentation de pression $\Delta p$ mesurée et la pression de remplissage $p_{tot}$ requise pour l'injection de gaz noble ou l'injection d'hélium gazeux est calculée à partir de la pression partielle de la vapeur d'eau $p_{H2O}$ pour atteindre la teneur % en volume de gaz noble ou d'hélium souhaitée de 50 à 95 % en volume dans le récipient (1), dans lequel l'évacuation et/ou l'injection de gaz noble ou l'injection d'hélium gazeux est effectuée à condition que la teneur en gaz noble ou la teneur en hélium dans l'espace intérieur du récipient soit de 50 à 95 % en volume, en particulier de 55 à 90 % en volume, de préférence de 60 à 85 % en volume et avantageusement de 65 à 85 % en volume.

2. Procédé selon la revendication 1, dans lequel la première évacuation de l'espace intérieur du récipient est effectuée jusqu'à une pression de 8 à 30 mbar, en particulier de 10 à 30 mbar et avantageusement de 10 à 20 mbar dans l'espace intérieur du récipient (4).

3. Procédé selon l'une des revendications 1 ou 2, dans lequel l'évacuation continue de l'espace intérieur du récipient (4) et l'alimentation en gaz noble ou l'alimentation en hélium gazeux continue simultanée sont effectuées après la première évacuation ou après la mesure de l'augmentation de pression, et notamment de préférence effectuées à condition que la pression dans l'espace intérieur du récipient (4) soit comprise entre 8 et 30 mbar, en particulier entre 10 et 30 mbar, avantageusement entre 10 et 20 mbar.

4. Procédé selon l'une des revendications 1 à 3, dans lequel l'évacuation continue et l'injection de gaz noble ou l'injection d'hélium gazeux continue sont effectuées sur une durée d'au moins 3 heures, de préférence d'au moins 5 heures et avantageusement d'au moins 4,5 heures.

5. Procédé selon l'une des revendications 1 à 4, dans lequel l'évacuation est terminée une fois que le degré de séchage souhaité est atteint dans l'espace intérieur du récipient (4), et du gaz noble ou de l'hélium gazeux supplémentaire est tout d'abord injecté dans l'espace intérieur du récipient (4) jusqu'à obtention d'une pression prédéfinie dans l'espace intérieur du récipient (4).

6. Procédé selon la revendication 5, dans lequel l'espace intérieur du récipient (4) est rempli de gaz noble ou d'hélium gazeux jusqu'à une pression d'espace intérieur de 850 à 1100 mbar, en particulier jusqu'à une pression d'espace intérieur de 900 à 1050 mbar et de préférence jusqu'à une pression d'espace intérieur de 900 à 1000 mbar.

7. Procédé selon l'une des revendications 1 à 6, dans lequel du gaz noble ou de l'hélium gazeux est injecté dans la région supérieure du récipient (1).

8. Procédé selon l'une des revendications 1 à 7, dans lequel l'aspiration ou l'évacuation de l'espace intérieur du récipient (4) dans la région inférieure du récipient (1) est effectuée au moyen d'au moins une lance d'évacuation.

9. Procédé selon l'une des revendications 1 à 8, dans lequel l'évacuation et l'injection de gaz noble ou l'injection d'hélium gazeux sont effectuées à l'aide d'au moins un double tuyau (3) constitué d'un tuyau extérieur (6) et d'un tuyau intérieur (5) entouré par le tuyau extérieur (6), dans lequel le tuyau intérieur (5) s'étend de préférence jusqu'à la région inférieure du récipient (1) et dans lequel le tuyau extérieur (6) se termine dans la région supérieure du récipient (1).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 10229764 B2
- US 9117558 B1
- US 2017154690 A1

### In der Beschreibung aufgeführte Nicht-Patentliteratur

- **IRWIN JJ et al.** Spent Nuclear Fuel Project Cold Vacuum Drying Facility Operations Manual. *Internet Citation,* 18. November 1998, 1-1